# EUROPÄISCHE PATENTSCHRIFT

(11) **EP 4 313 701 B1**
(45) Veröffentlichungstag und Bekanntmachung des Hinweises auf die Patenterteilung: **21.05.2025**
(21) Anmeldenummer: 22718293.8
(22) Anmeldetag: 25.03.2022
(51) Int. Cl.: G01L 5/14

(54) **STÜTZWINDE MIT EINEM KRAFTMESSELEMENT**
TRAILER LANDING GEAR HAVING A FORCE-MEASURING ELEMENT
TRAIN D'ATTERRISSAGE DE REMORQUE COMPRENANT UN ÉLÉMENT DE MESURE DE FORCE

(30) Priorität: 25.03.2021 DE 102021001553
(43) Veröffentlichungstag der Anmeldung: 07.02.2024
(73) Patentinhaber: JOST-Werke Deutschland GmbH, 63263 Neu-Isenburg (DE)
(72) Erfinder: ALGÜERA, José Manuel, 63739 Aschaffenburg (DE); SEIDEL, Günter, 64560 Riedstadt (DE)
(74) Vertreter: Straubel, Dirk
(86) Internationale Anmeldenummer: PCT/IB2022/052774
(87) Internationale Veröffentlichungsnummer: WO 2022/201128

(56) Entgegenhaltungen:
- EP-A1- 3 293 062
- WO-A1-2005/042319
- DE-A1- 102005 036 139
- DE-B3- 102018 122 244
- DE-U1- 202014 000 337

## Beschreibung

Die Erfindung betrifft eine Stützwinde mit einem Kraftmesselement gemäß der im Oberbegriff des Anspruchs 1 stehenden Merkmale.

Derartige Stützwinden sind häufig an Sattelaufliegern oder allgemein Anhängern angebracht und stützen diese insbesondere in einem vom Zugfahrzeug abgekuppelten Zustand auf dem Untergrund ab. Hierdurch behält der Sattelauflieger in seiner Parkposition eine stabile Lage und kann für ein erneutes Ankuppeln von einem Zugfahrzeug angefahren werden. In anderen Anwendungsfällen sind die Stützwinden am Heck von Silofahrzeugen angeordnet und werden vor dem Einleiten des Kippvorgangs ausgefahren, um das Fahrzeug zu stabilisieren. EP-A-3293062 offenbart eine solche Stützwinde.

Aus der DE 10 2005 036 139 A1 ist eine Stützwinde mit einem Druckelement und einem Stützlastindikator bekannt geworden, welches dem Bediener beim Ausfahren der Stützwinde einen sicheren Stand anzeigt. Das Druckelement umfasst ein Federelement und ein damit zusammenwirkendes Schaltelement in Form eines mechanischen Tasters, wobei das Federelement zwischen einem ortsfest an der Spindel angeordneten Spindelanschlagring und der Spindellagerplatte angeordnet ist. Während eines Ausfahrens der Stützwinde wandert bei einem tragfähigen Untergrund die Spindel gegen die Spindellagerplatte, so dass sich das Federelement verformt und das Schaltelement betätigt. Das Schaltelement wiederum steht mit einem Anzeigeelement in Verbindung, das dem Bediener das Vorliegen einer belasteten Stützwinde anzeigt. Es hat sich jedoch als nachteilig herausgestellt, dass das Federelement nach häufigen Belastungswechseln keine reproduzierbaren Werte liefert und mithin bereits bei einer zu geringen Krafteinleitung das Schaltelement auslöst. Überdies ist mit dem Stützlastindikator keine quantitative Aussage über die von der Stützwinde übertragenen Kräfte möglich.

Folglich lag der Erfindung die Aufgabe zugrunde, eine Stützwinde bereitzustellen, die eine quantitative und reproduzierbare Messung der von der Stützwinde auf den Untergrund übertragenen Kräfte ermöglicht.

Die Aufgabe wird erfindungsgemäß mit den Merkmalen des Anspruchs 1 gelöst. Mit einem in dem Stützbauteil integrierten Kraftmesselement lässt sich feststellen, ob ein abzukuppelnder Anhänger sicher abgestellt ist und insbesondere bei einem Sattelauflieger die Stützwinden festen Bodenkontakt haben. Neben dieser qualitativen Feststellung erfolgt auch eine quantitative Feststellung der auf die Stützwinden wirkenden Last. Hierdurch ist es möglich, zusammen mit einer Erfassung der Achslasten auf das Gesamtgewicht des Anhängers zu schließen und hierdurch eine potentielle Überladung oder eine ungleichmäßige Ladungsverteilung zu ermitteln.

Unter einem Kraftmesselement wird ein Sensor verstanden, der aus einer Verformung des Stützbauteils ein zu der eingeleiteten Kraft proportionales Signal erzeugt. Hierbei handelt es sich beispielsweise um piezoelektrisch arbeitende Sensoren, welche die Änderung der elektrischen Polarisation und somit das Auftreten einer elektrischen Spannung an Festkörpern erfassen, wenn diese elastisch verformt werden. Alternativ können kapazitive Sensoren als Kraftmesselement zum Einsatz kommen.

Das Kraftmesselement ist an dem Stützbauteil angebracht, wobei hierbei eine Befestigung des Kraftmesselementes innerhalb des Stützbauteils oder auf der Oberfläche des Stützbauteils bevorzugt ist. Allen Befestigungspositionen ist gemein, dass das Kraftmesselement derart mit dem Stützbauteil verbunden ist, dass es dessen Verformung möglichst präzise erfasst, wobei eine kraft-, stoff- und/oder formschlüssige Verbindung geeignet ist, insbesondere durch passgenaues Klemmen oder eine Klebung.

Günstigerweise ist unter der Spindellagerplatte ein Axiallager der Spindel angeordnet. Das Axiallager umgreift die Spindel und sorgt für eine drehbare Lagerung der Spindel bei gleichzeitiger Abstützung der auf Druck beanspruchten Spindel in axialer Richtung gegen die Spindellagerplatte. Eine radiale Lagerung der Spindel erfolgt hingegen durch die Spindelöffnung in der Spindellagerplatte.

Gemäß einer besonders sinnvollen Ausgestaltung liegt das Axiallager zumindest in belastetem Zustand der Spindel mit seinem oberen Lagerabschnitt an der Unterseite des Stützbauteils an. Der obere Lagerabschnitt des Axiallagers ist hierdurch zumindest unter Last ortsfest zu dem Stützbauteil angeordnet.

Gemäß einer ersten bevorzugten Ausführungsform ist das Stützbauteil die Spindellagerplatte. Alternativ hierzu kann das Stützbauteil auch eine zwischen dem oberen Lagerabschnitt des Axiallagers und der Spindellagerplatte angeordnete Messplatte sein. Die Messplatte ist beispielsweise als Messring ausgeformt, welcher die Spindel koaxial umgibt.

Vorzugsweise ist die Messplatte bezüglich des Außenrohrs drehfest montiert. Hieraus resultiert der Vorteil, dass eine Anschlussleitung stationär verlegbar ist.

Die Messplatte kann insbesondere eine konkave oder brückenartige Form mit außenliegenden, der Spindellagerplatte zugewandten Stützabschnitten und einem dazwischen angeordneten, freitragenden Abschnitt aufweisen. Aufgrund dieser Form ist im Bereich des freitragenden Abschnittes stets ein freier Bauraum zu der Spindellagerplatte vorhanden, in welchen beispielsweise besonders geschützt ein Kraftmesselement eingesetzt sein kann. Überdies sorgt die konkave oder brückenartige Form der Messplatte für eine größere Verformung der Messplatte im Bereich des freitragenden Abschnittes bei einer Krafteinleitung aus dem Axiallager, welches eine axial gerichtete Kraft mittig auf den freitragenden Abschnitt einleitet, wodurch eine verhältnismäßig große Verformung und dadurch bedingt eine genauere Kraftmessung möglich ist.

Das Axiallager kann insbesondere mit seinem unteren Lagerabschnitt an einem fest mit der Spindel verbundenen Spindelanschlagring anliegen. Der untere Lagerabschnitt ist somit drehbeweglich zu dem Stützbauteil und ortsfest zur Spindel angeordnet. Bei belasteter Spindel drückt das Stützbauteil von unten gegen den unteren Lagerabschnitt und schiebt das Axiallager mit dem oberen Lagerabschnitt gegen das Stützbauteil, welches sich infolge der eingeleiteten Last deformiert.

Sinnvollerweise ist das Kraftmesselement über dem Axiallager zumindest teilweise in dessen projizierter Fläche angeordnet. In diesem Bereich wird die Last über das Axiallager in das Stützbauteil eingeleitet und die vom Kraftmesselement messbare Verformung ist am Größten, wodurch eine besonders exakte und reproduzierbare Bestimmung der eingeleiteten Kraft möglich ist.

Zweckmäßigerweise ist das Kraftmesselement gemäß einer weiteren Ausgestaltung der Erfindung stiftförmig ausgebildet und in eine komplementär ausgeformte Ausnehmung des Stützbauteils spielfrei oder unter Vorspannung eingesetzt.

Besonders zweckmäßig ist eine Ausführungsform, bei welcher das stiftförmig ausgebildete Kraftmesselement ein Messdübel ist. Unter einem Messdübel wird ein in Querrichtung kraftempfindlicher Sensor verstanden, der typischerweise mit einer zylindrischen Form ausgebildet und in eine komplementär ausgeformte Messdübelbohrung in dem zu messenden Bauteil stets oder zumindest bei Vorliegen der zu erwartenden Betriebslast passgenau und/oder unter Vorspannung eingesetzt ist. Die Vorspannung des Messdübels wird beispielsweise mittels einer in den Messdübel integrierten Klemmvorrichtung realisiert.

Vorzugsweise ist die Ausnehmung eine in dem Stützbauteil ausgebildete Messdübelbohrung, in welche der Messdübel eingesetzt ist. Der Durchmesser der Messdübelbohrung beträgt typischerweise 6,00 mm bis 10,00 mm, besonders bevorzugt 8 mm.

Die Messdübelbohrung kann in dem Stützbauteil beispielsweise radial zu der Spindel ausgerichtet sein. Bevorzugt ist die Messdübelbohrung außerdem orthogonal zu einer benachbarten Wandung des Außenrohres angeordnet, wodurch die Länge der Messdübelbohrung und damit die Materialschwächung des Stützbauteils möglichst gering ist.

Günstigerweise überstreicht die Messdübelbohrung in axialer Richtung versetzt das Axiallager zumindest teilweise. Hierdurch ist es möglich, den Messdübel über dem Axiallager in einem Bereich der maximalen Krafteinleitung zu platzieren.

Zweckmäßigerweise ist die Messdübelbohrung als Sackloch ausgeformt und der Messdübel in das Bohrlochtiefste des Sacklochs eingesetzt. Hieraus resultiert eine besonders geschützte Montageposition des Messdübels.

Gemäß einer weiteren, alternativen Ausführungsform ist das Kraftmesselement eine Dehnungs-Mess-Streifen-Applikation. Die Dehnungs-Messstreifen-Applikation dient zur Erfassung von dehnenden und stauchenden Verformungen des Stützbauteils. Sie ändert schon bei geringen Verformungen ihren elektrischen Widerstand und wird als Dehnungssensor eingesetzt. Typischerweise ist die Dehnungs-Messstreifen-Applikation auf das sich unter Belastung minimal verformende Stützbauteil geklebt. Dessen Verformung (Dehnung) unter Last führt dann zur Veränderung des elektrischen Widerstands der Dehnungs-Messstreifen-Applikation.

Bevorzugt ist eine Anbringung der Dehnungs-Mess-Streifen-Applikation auf einer Ober- und/oder Unterseite des Stützbauteils. Hieraus resultiert einerseits der Vorteil, dass keine Schwächung des Stützbauteils durch Bohrungen oder Ausfräsungen vorzunehmen sind und andererseits, dass auf der Oberseite und Unterseite des Stützbauteils eine maximale Dehnung oder Stauchung vorliegt und dadurch besonders exakte und reproduzierbare Messwerte erzielbar sind.

Vorteilhafterweise ist das Kraftmesselement ein zwischen der Messplatte und der Spindellagerplatte angeordneter Drucksensor. Ein Drucksensor gehört zur Gruppe der Druckmessgeräte, welche als erstes Glied einer Messkette die physikalische Größe Druck (Kraft pro Fläche) in eine elektrische Ausgangsgröße als Maß für den Druck umformen. Geeignet ist insbesondere ein piezoresistiv oder piezoelektrisch, kapazitiv oder induktiv arbeitender Drucksensor sowie ein Drucksensor mit Hallelement.

Eine besonders sinnvolle Ausgestaltung der Erfindung kann vorsehen, dass der Drucksensor derart an dem freitragenden Abschnitt der konkav oder brückenartig geformten Messplatte angeordnet ist, dass ein Kraftnebenschluss über den Drucksensor auf die Spindellagerplatte erfolgt. Hieraus resultiert der Vorteil, dass der Drucksensor nicht den gesamten Kraftfluss der Stützwinde übertragen muss und dadurch weitgehend vor einer Überlastung geschützt ist. Auch ist das Spektrum der zu übertragenden Kräfte geringen, so dass ein Drucksensor mit einem geringer gespreizten Messbereich verwendet werden kann, welcher wiederum präzisere Messwerte bereitstellt.

Zum besseren Verständnis wird die Erfindung nachfolgend anhand von neun Figuren näher erläutert. Es zeigen die
- **Fig. 1:**: einen Längsschnitt durch eine Stützwinde gemäß einer ersten Ausführungsform mit einem stiftförmig ausgebildeten Kraftmesselement in einer Spindellagerplatte;
- **Fig. 2:**: einen Querschnitt durch die Stützwinde gemäß Fig. 1 in der Schnittebene C-C;
- **Fig. 3:**: einen vergrößerten Ausschnitt des Details X in Fig. 2;
- **Fig. 4:**: einen Längsschnitt durch den oberen Abschnitt einer Stützwinde gemäß einer zweiten Ausführungsform mit einem stiftförmig ausgebildeten Kraftmesselement in der Spindellagerplatte;
- **Fig. 5:**: einen Längsschnitt durch eine schematisch dargestellte Stützwinde mit einer Dehnungs-Messstreifen-Applikation als Kraftmesselement auf der Spindellagerplatte;
- **Fig. 6:**: einen Längsschnitt durch eine schematisch dargestellte Stützwinde mit einem stiftförmig ausgebildeten Kraftmesselement in einer Messplatte;
- **Fig. 7:**: einen Längsschnitt durch eine schematisch dargestellte Stützwinde mit einer Dehnungs-Messstreifen-Applikation als Kraftmesselement auf einer Messplatte;
- **Fig. 8:**: einen Längsschnitt durch eine schematisch dargestellte Stützwinde mit einer konkaven oder brückenartigen Messplatte und einem darin eingesetzten Kraftmesselement und
- **Fig. 9:**: einen Längsschnitt durch eine schematisch dargestellte Stützwinde mit einer konkaven oder brückenartigen Messplatte und einem zwischen freitragendem Abschnitt und Spindellagerplatte angeordneten Drucksensor.

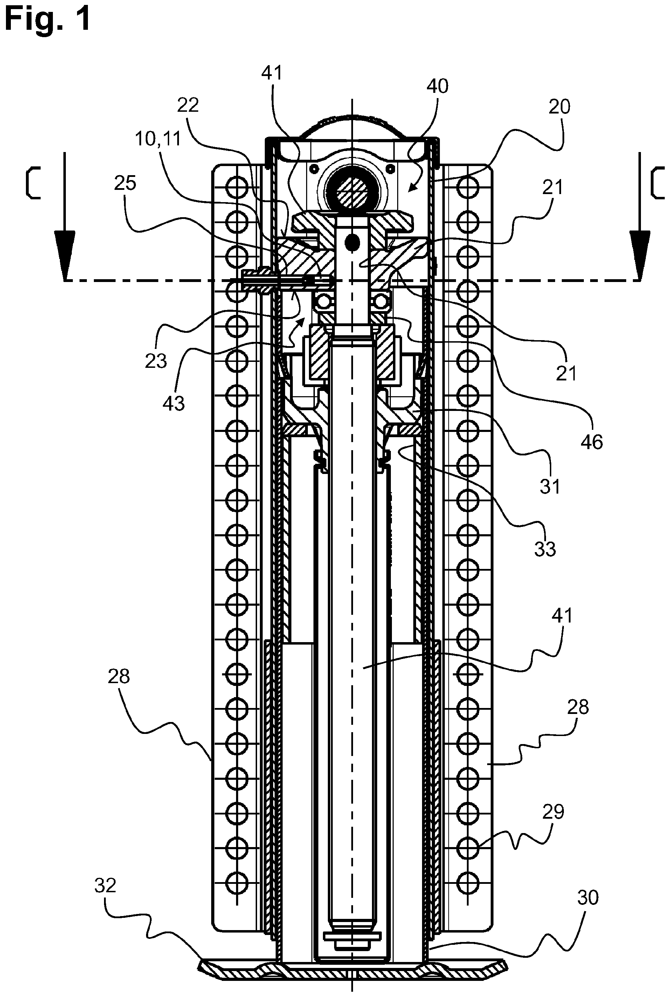

Die Fig. 1 zeigt einen Längsschnitt einer Stützwinde mit einem Außenrohr 20 in Form eines Vierkantprofils und einem axial darin geführten Innenrohr 30. Aufgrund der komplementären Profilform von Außen- und Innenrohr 20, 30 ist das Innenrohr 30 in Umfangsrichtung drehfest in dem Außenrohr 20 gehalten.

Für eine Befestigung der Stützwinde an einem Fahrzeug ragt beidseitig des Außenrohrs 20 eine Montageflanschplatte 28 hervor, in welcher in diskreten Abständen Montagelöcher 29 eingebracht sind. Das Innenrohr 30 trägt an seinem unteren Ende einen Stützfuß 32, mit welchem die Stützwinde bei ausgefahrenem Innenrohr 30 auf dem Untergrund aufsteht.

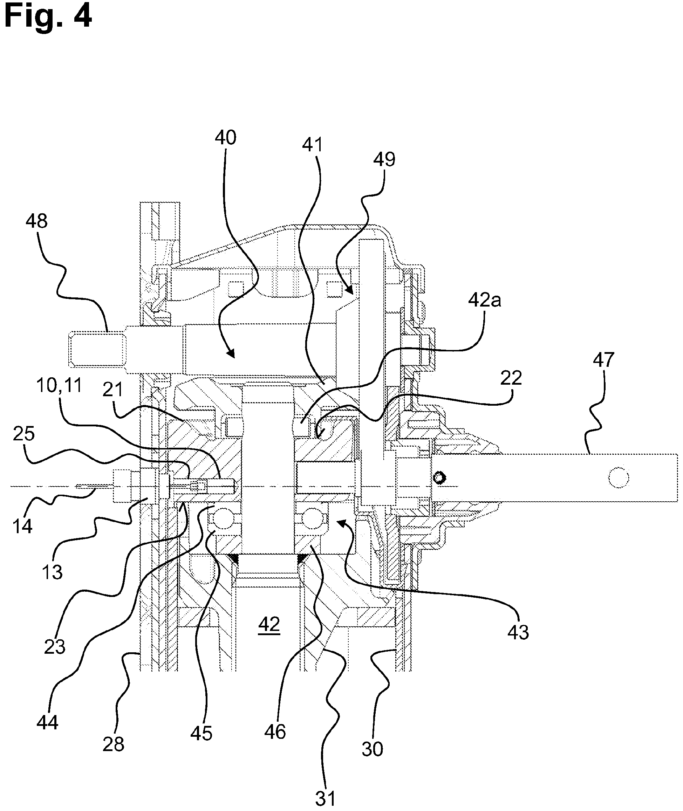

In dem Außenrohr 20 ist eine Getriebeanordnung 40 mit einer gegenüber dem Außenrohr 20 drehbar gelagerten Spindel 42 und einem Zahnrad 41 angeordnet, welches an einem oberen Endabschnitt der Spindel 42 drehfest mit dieser verbunden ist. Die Getriebeanordnung 40 ist insbesondere von einem in Fig. 4 dargestellten Zahnradsatz 49 und einer Getriebeeingangswelle 47 in Drehung versetzt. Durch eine Drehung der Spindel 42 wandert eine an einem oberen Abschnitt 33 des Innenrohrs 30 fest eingesetzte Spindelmutter 31 je nach Drehsinn entweder nach unten oder nach oben. Bei einer Bewegung der Spindelmutter 31 nach unten, drückt sie das Innenrohr 30 nebst daran befestigtem Stützfuß 32 in Richtung Untergrund und die Stützwinde wird ausgefahren. Bei einer Bewegung der Spindelmutter 31 nach oben, hebt sie das Innenrohr 30 nebst Stützfuß 32 an und die Stützwinde wird eingefahren.

Die Spindel 42 durchläuft eine unter dem Zahnrad 41 angeordnete Spindellagerplatte 21, welche mit einer Spindelöffnung 24 ausgebildet ist, deren Innendurchmesser nur geringfügig größer als der Außendurchmesser der Spindel 42 gewählt ist. Mit Hilfe der Spindellagerplatte 21 und der Spindelöffnung 24 ist die Spindel 42 in ihrer radialen Richtung gelagert. Die Spindellagerplatte 21 ist mindestens an drei Seiten, bevorzugt an vier Seiten, fest mit der Innenwand des Außenrohrs 20 verbunden. Die Spindellagerplatte 21 ist im Wesentlichen orthogonal zu der Erstreckung des Außenrohrs 20 ausgerichtet. Die Spindel 42 und die zugehörige Spindelöffnung 24 in der Spindellagerplatte 21 sind mittig in dem Außenrohr 20 untergebracht.

Unter der Spindellagerplatte 21 ist auf die Spindel 42 ein Axiallager 43 aufgeschoben, welches wiederum an einen Spindelanschlagring 46 angrenzt. Sobald der Stützfuß 32 auf dem Untergrund aufsteht, drückt der Spindelanschlagring 46 das Axiallager 43 nach oben, bis dieses an einer Unterseite 23 der Spindellagerplatte 21 zur Anlage gelangt.

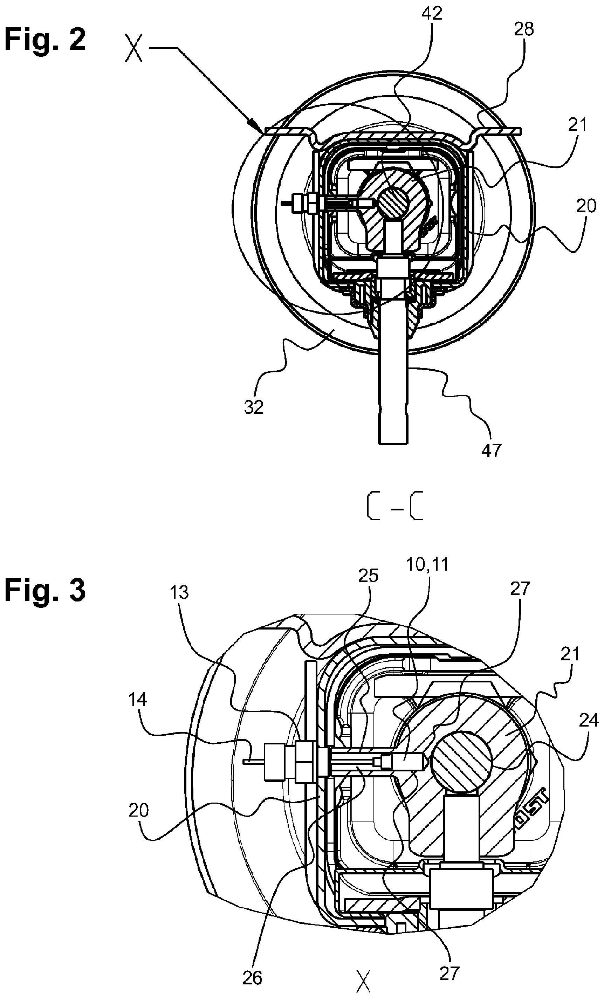

In der Spindellagerplatte 21 ist eine quer zur Spindel 42 ausgerichtete Ausnehmung 25, insbesondere eine Messdübelbohrung 25, eingebracht, die sich an ihrem der Spindel 42 abgewandten Ende auch durch das Außenrohr 20 erstreckt. Die Ausnehmung 25 ist bei demselben Stützwindentyp in Fig. 2 als Ansicht auf die Schnittebene C-C gemäß Fig. 1 und in vergrößerter Darstellung in Fig. 3 besonders gut zu erkennen. In dem Ausführungsbeispiel ist die Ausnehmung 25 als Sackloch 26 ausgebildet, dessen Bohrlochtiefstes 27 in der Spindellagerplatte 21 unmittelbar in räumlicher Nähe zu der Spindelöffnung 24 angeordnet ist. Die Ausnehmung 25 verläuft in diesem Ausführungsbeispiel parallel zu den Montageflanschplatten 28 und ist somit bei einer an einem Fahrzeug montierten Stützwinde in beziehungsweise entgegen der Fahrtrichtung ausgerichtet.

In die Ausnehmung 25 ist ortsfest ein stiftförmig ausgebildetes Kraftmesselement 10, insbesondere in Form eines Messdübels 11, eingesetzt und innerhalb der Messdübelbohrung 25 gegenüber der Spindellagerplatte 21 verspannt. Die Lage des beispielhaft dargestellten Messdübels 11 befindet sich im Bereich des Bohrlochtiefsten 27 und somit in einer projizierten Fläche über dem Axiallager 43. Bei gegenüber dem Außenrohr 20 ausgefahrenem Innenrohr 30 und auf dem Untergrund aufstehendem Stützfuß 32 erfolgt ein Kraftfluss von dem Stützfuß 32 über das Innenrohr 30, die Spindelmutter 31, die Spindel 42 und das Axiallager 43 in die Spindellagerplatte 21. Da die Spindellagerplatte 21 an ihrem Randbereich mit dem Außenrohr 20 kraftschlüssig verbunden ist, kommt es in dem Bereich der Spindellagerplatte 21 über dem Axiallager 43 zu der verhältnismäßig größten Verformung und damit zu einer möglichst präzisen Messung dieser Verformung mittels des Messdübels 11, dessen Messwert einer entsprechenden Stützlast zuordbar ist.

Die innerhalb der Spindellagerplatte 21 beispielhaft angeordnete Messdübelbohrung 25 setzt sich in fluchtender Erstreckung auch in dem Außenrohr 20 fort. In ein offenes Ende der Messdübelbohrung 25 ist eine Übergangskupplung 13 eingesetzt, mit deren Hilfe die Messdübelbohrung 25 nach außen verschlossen ist und durch welche lediglich eine Anschlussleitung 14 aus der Messdübelbohrung 25 herausgeführt ist. Über die Anschlussleitung 14 ist der Messdübel 11 elektrisch an ein Bordnetzwerk eines hier nicht gezeigten Fahrzeugs angeschlossen, aus welchem der Messdübel 11 mit elektrischer Energie versorgt ist. Überdies stellt der Messdübel 11 Messsignale der Kraftmessung über die Anschlussleitung 14 dem Fahrzeug zur Verfügung.

In Fig. 4 ist ein alternatives Ausführungsbeispiel gezeigt, bei welchem die Messdübelbohrung 25 um 90° versetzt in der Spindellagerplatte 21 und dem Außenrohr 20 angeordnet ist und rückseitig, zwischen den Montageflanschplatten 28 das Außenrohr 20 durchbricht.

Für ein Aus- oder Einfahren weist die Stützwinde die Getriebeeingangswelle 47 auf, mit welcher insbesondere eine nicht gezeigte Kurbel drehfest verbindbar ist. Mit Hilfe der Kurbel kann eine Bedienperson die Getriebeeingangswelle 47 in Drehung versetzen, wodurch das Innenrohr 30 mit dem Stützfuß 32 je nach Drehsinn wahlweise aus- oder einfährt. In der Darstellung der Fig. 4 befindet sich das Innenrohr 30 in einer bezüglich des Außenrohrs 20 eingefahrenen Position.

Die Getriebeeingangswelle 47 überträgt das Drehmoment auf den Zahnradsatz 49, welcher das Zahnrad 41 der Getriebeanordnung 40 kämmt und außerdem an einer Getriebeausgangswelle 48 angreift. Die Getriebeeingangswelle 47 und die Getriebeausgangswelle 48 sind achsparallel zueinander ausgerichtet. Ebenfalls parallel zu der Getriebeeingangswelle 47 und der Getriebeausgangswelle 48 verläuft die Ausnehmung 25 beziehungsweise Messdübelbohrung 25.

Das Axiallager 43 der Spindel 42 ist zweiteilig aufgebaut und umfasst einen oberen Lagerabschnitt 44, der benachbart zu der Unterseite 23 der Spindellagerplatte 21 angeordnet ist. Bei einem in das Außenrohr 20 eingefahrenen Innenrohr 30 kann aufgrund des Eigengewichts von Innenrohr 30 und Stützfuß 32 zwischen dem oberen Lagerabschnitt 44 und der Unterseite 23 der Spindellagerplatte 21 ein Spalt ausgebildet sein, da in dieser eingefahrenen Position die Spindel 42 mittels ihres Sicherungsbolzens 42a hängend an einer Oberseite 22 der Spindellagerplatte 21 abgestützt ist.

Bei ausgefahrenem Innenrohr 30 und einem auf dem Untergrund aufstehenden Stützfuß 32 wird die Spindel 42 nach oben gedrückt und der ortsfest an der Spindel 42 angeformte Spindelanschlagring 46 stößt gegen einen unteren Lagerabschnitt 45 des Axiallagers 43. Mit Hilfe des Axiallagers 43 erfolgt eine Kraftübertragung auf den oberen Lagerabschnitt 44, welcher gegen die Unterseite 23 der Spindellagerplatte 21 gedrückt ist und an dieser anliegt. Gleichzeitig lässt das Axiallager 43 auch bei einer Druckbelastung der Stützwinde eine weitere Rotation der Spindel 42 zu.

Die radial auf die Spindel 42 zulaufende Messdübelbohrung 25 ist derart ausgerichtet und dimensioniert, dass der darin verspannte Messdübel 11 über dem Axiallager 43 und somit möglichst nah am Krafteinleitungspunkt der von der Spindel 42 in die Spindellagerplatte 21 übertragenen Kräfte angeordnet ist.

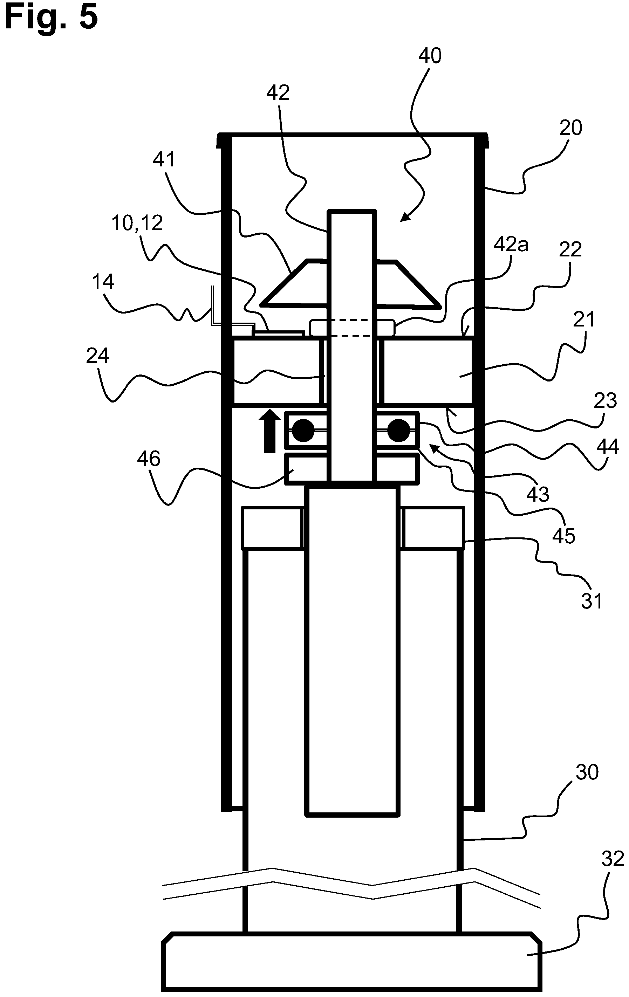

Die Fig. 5 stellt eine alternative Ausführungsform mit einem Kraftmesselement 10 in Form einer Dehnungs-Messstreifen-Applikation 12 dar. Die Dehnungs-Messstreifen-Applikation 12 ist auf der Oberseite 22 der Spindellagerplatte 21 aufgebracht und überlappt zumindest teilweise mit dem darunter angeordneten Axiallager 43, über das bei einem auf dem Untergrund aufstehenden Stützfuß 32 eine Druckkraft in Pfeilrichtung auf die Spindellagerplatte 21 übertragen wird. Hierdurch findet ein Großteil der Verformung der Spindellagerplatte 21 in einem Bereich der Dehnungs-Messstreifen-Applikation 12 statt, wodurch eine besonders präzise Kraftmessung möglich ist.

Die Dehnungs-Messstreifen-Applikation 12 ist mittels einer Anschlussleitung 14 an das Energie- und Datensystem eines Fahrzeugs anschließbar.

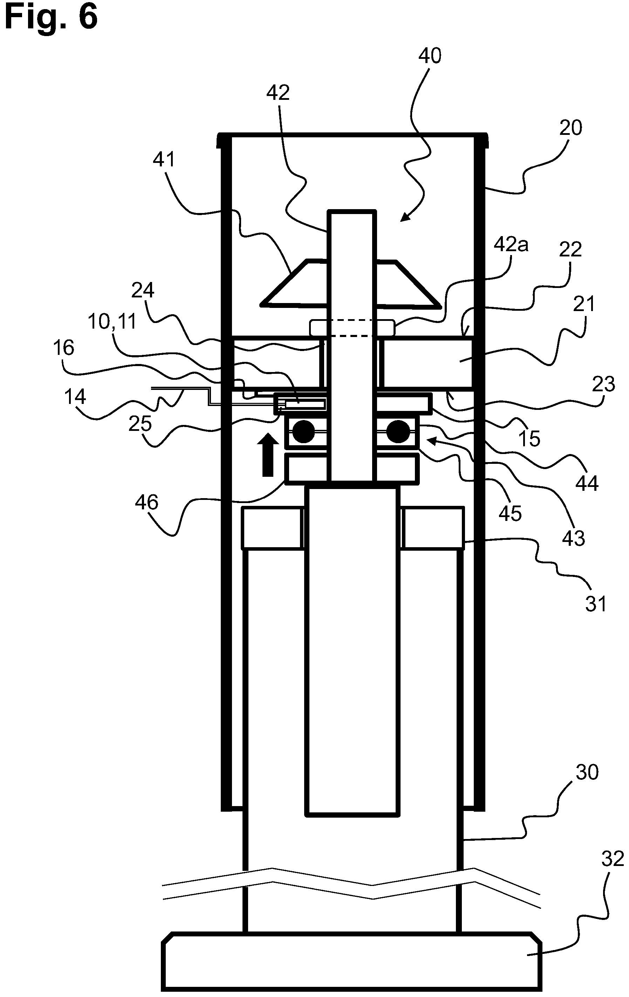

In der Fig. 6 ist ein weiteres Ausführungsbeispiel dargestellt, bei dem zwischen dem Axiallager 43 der Spindel 42 und der am Außenrohr 20 befestigten Spindellagerplatte 21 eine Messplatte 15 eingesetzt ist. Die Messplatte 15 ist mit einer zentrischen Bohrung zur Aufnahme der Spindel 42 versehen und mit einer geschlossenen Ringform ausgebildet. Bei einer ausgefahrenen und belasteten Stützwinde erfährt die Messplatte 15 eine Stauchkraft aus der nach oben in Pfeilrichtung wandernden Spindel 42, welche die Messplatte 15 über den Spindelanschlagring 46 und das Axiallager 43 gegen die Unterseite 23 der Spindellagerplatte 22 drückt. Die Spindellagerplatte 22 sorgt für eine Kraftübertragung auf das Außenrohr 20 und von dort über die Montageflanschplatte 28 (siehe Fig. 1) auf das Fahrzeug.

Die Messplatte 15 weist eine Ausnehmung 25 auf, insbesondere eine Messdübelbohrung 25, in welche als Kraftmesselement 10 ein stiftförmig ausgebildetes Kraftmesselement 10, insbesondere ein Messdübel 11, eingesetzt ist. Die Ausnehmung 25 ist radial zu der Spindel 42 ausgerichtet und das stiftförmig ausgebildete Kraftmesselement 10, insbesondere der Messdübel 11, befindet sich über dem Axiallager 43 der Spindel 42, welches im belasteten Zustand der Stützwinde die Kräfte in die Messplatte 15 überträgt.

Um ein Mitdrehen der Messplatte 15 zusammen mit der Spindel 42 zu verhindern, ist die Messplatte 15 über einen Messplattenhalter 16 drehfest an die Spindellagerplatte 21 angeschlossen. Hierdurch ist die Messplatte 15 drehfest zu dem Außenrohr 20 gehalten und die Anschlussleitung 14 kann an einer vorgegebenen Position aus dem Außenrohr 20 herauszuführt sein, ohne bewegliche Kabel verlegen zu müssen.

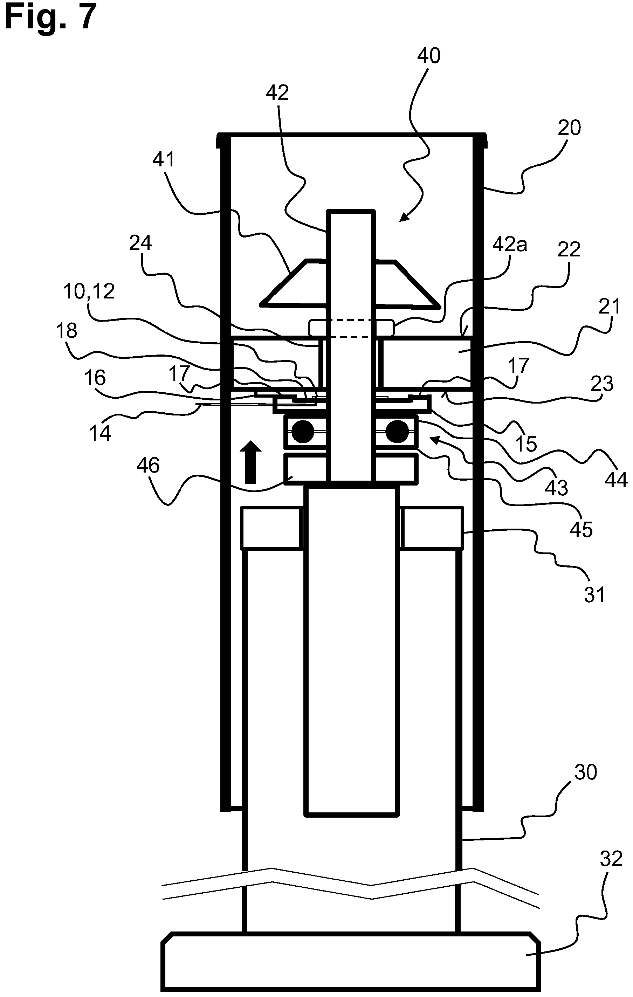

Die Fig. 7 zeigt ein weiteres Ausführungsbeispiel mit einer Messplatte 15, die mit einer Dehnungs-Messstreifen-Applikation 12 versehen ist. Die Messplatte 15 ist mit einer konkaven oder brückenartigen Form ausgebildet und stützt sich im Belastungsfall lediglich in ihren seitlichem Randbereich mittels Stützabschnitte 17 an der Unterseite 23 der Spindellagerplatte 21 ab. Der sich zwischen den Stützabschnitten 17 befindliche freitragende Abschnitt 18 ist unabhängig von der Belastung des Axiallagers 43 stets beabstandet zu der Unterseite 23 der Spindellagerplatte 21 angeordnet und trägt die Dehnungs-Messstreifen-Applikation 12, welche aufgrund dieses Einbauortes nicht mit der Spindellagerplatte 21 kollidieren kann.

Es ist ebenso möglich, die Messplatte 15 mit dem Kraftmesselement 10 als besonders dünn konfigurierte Messfolie auszubilden. Auch hier befindet sich die Messplatte 15 im Kraftfluss zwischen dem Axiallager 43 und dem Außenrohr 20, um dort etwaige Kräfte messen zu können.

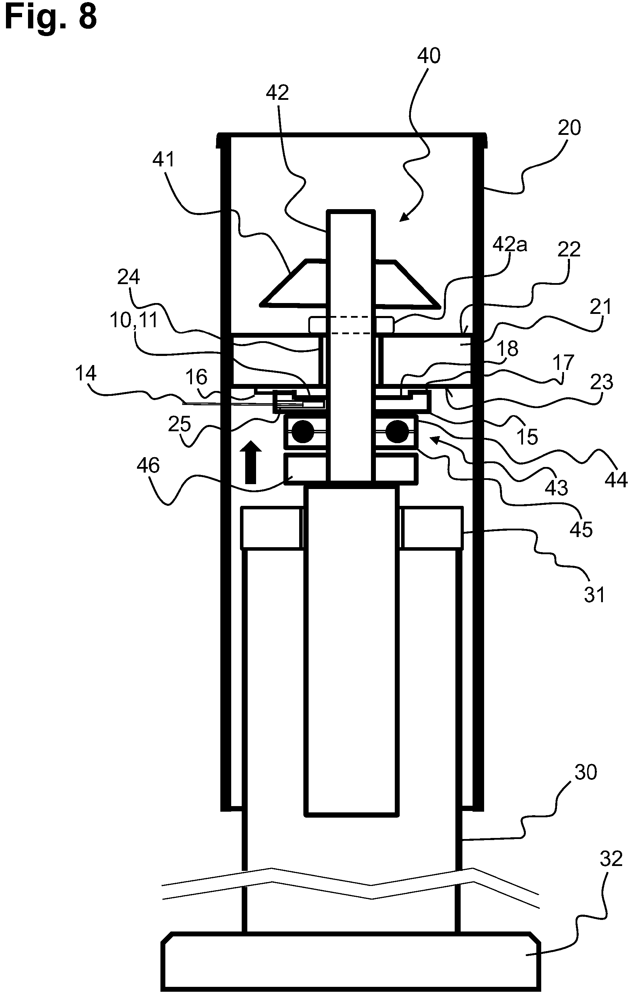

Die Fig. 8 zeigt ein weiteres Ausführungsbeispiel mit einer konkaven oder brückenartigen Form der Messplatte 15, deren aufstrebende Stützabschnitte 17 in Richtung der Spindellagerplatte 21 gegenüber dem dazwischen angeordneten, freitragenden Abschnitt 18 vorstehen. In der Messplatte 15 ist eine radial auf die Spindel 42 zulaufende Ausnehmung 25 ausgeformt, insbesondere eine Messdübelbohrung 25, in welche ein stiftförmig ausgebildetes Kraftmesselement 10, insbesondere ein Messdübel 25, eingesetzt ist. Das Kraftmesselement 10 befindet sich in einem Bereich des freitragenden Abschnittes 18 der Messplatte 15, welcher bei Belastung der Stützwinde einer im Vergleich zu den Stützabschnitten 17 größeren, reversiblen Verformung unterliegt und eine besonders genaue Messung ermöglicht.

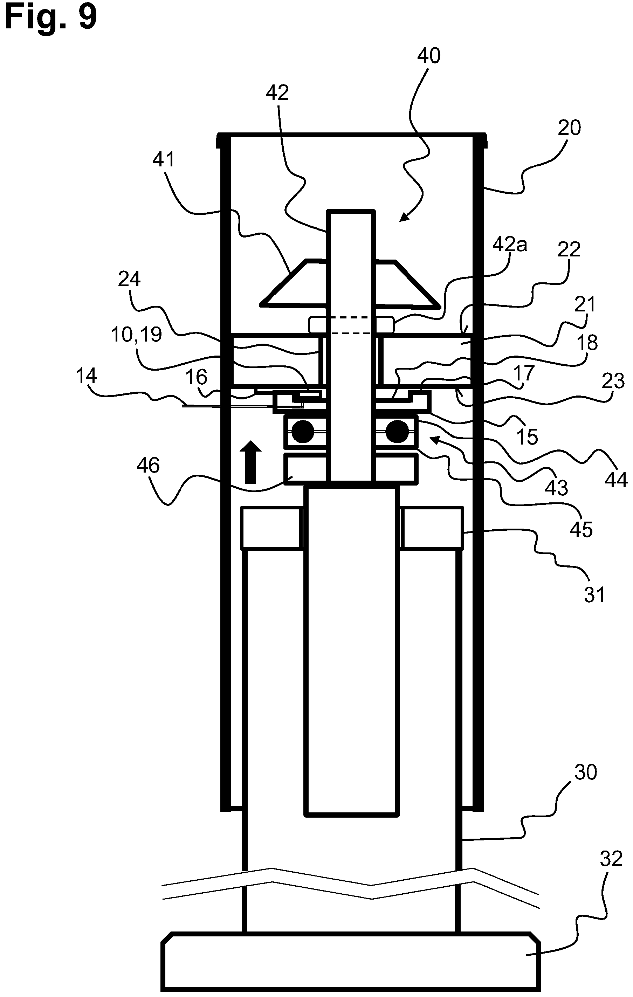

In der Fig. 9 ist eine erfindungsgemäße Stützwinde gemäß einer alternativen Ausgestaltung mit einer ebenfalls konkaven oder brückenartigen Messplatte 15 dargestellt. Als Kraftmesselement 10 kommt jedoch ein Drucksensor 19 zum Einsatz, welcher auf einer der Spindellagerplatte 21 zugewandten Seite des freitragenden Abschnittes 18 angeordnet ist. Der Drucksensor 19 schließt auf seiner Oberseite mit den Stützabschnitten 17 der Messplatte 15 ab und liegt bei Belastung der Stützwinde zusammen mit den Stützabschnitten 17 an der Unterseite 23 der Spindellagerplatte 21 an, so dass ein Kraftnebenschluss vorliegt und der Drucksensor 19 mit nur einem Teil der insgesamt von dem Axiallager 43 auf die Spindellagerplatte 21 übertragenen Kraft beaufschlagt ist.

### Bezugszeichenliste

- 10: Kraftmesselement
- 11: stiftförmiges Kraftmesselement, Messdübel
- 12: Dehnungs-Messstreifen-Applikation
- 13: Übergangskupplung
- 14: Anschlussleitung
- 15: Messplatte
- 16: Messplattenhalter
- 17: Stützabschnitt(e) Messplatte
- 18: freitragender Abschnitt Messplatte
- 19: Drucksensor

- 20: Außenrohr
- 21: Spindellagerplatte
- 22: Oberseite Spindellagerplatte
- 23: Unterseite Spindellagerplatte
- 24: Spindelöffnung Spindellagerplatte
- 25: Ausnehmung, Messdübelbohrung
- 26: Sackloch
- 27: Bohrlochtiefste Sackloch
- 28: Montageflanschplatte
- 29: Montagelöcher

- 30: Innenrohr
- 31: Spindelmutter
- 32: Stützfuß
- 33: oberer Abschnitt Innenrohr

- 40: Getriebeanordnung
- 41: Zahnrad
- 42: Spindel
- 42a: Sicherungsbolzen
- 43: Axiallager Spindel
- 44: oberer Lagerabschnitt
- 45: unterer Lagerabschnitt
- 46: Spindelanschlagring
- 47: Getriebeeingangswelle
- 48: Getriebeausgangswelle
- 49: Zahnradsatz

## Patentansprüche

1. Stützwinde mit einem Kraftmesselement (10), wobei die Stützwinde ein Außenrohr (20), ein darin verschiebbar gelagertes Innenrohr (30) und eine Getriebeanordnung (40) aufweist, welche mindestens eine von einem Zahnrad (41) angetriebene Spindel (42) umfasst, die durch eine Spindelöffnung (24) einer am Außenrohr (20) angreifenden Spindellagerplatte (21) hindurchgeführt und auf der eine an dem Innenrohr (30) befestigte Spindelmutter (31) gehalten ist,
**dadurch gekennzeichnet,**
**dass** das Kraftmesselement (10) an einem im Kraftfluss zwischen Spindel (42) und Außenrohr (20) angeordneten Stützbauteil (15, 21) angebracht ist.

2. Stützwinde nach Anspruch 1, **dadurch gekennzeichnet, dass** mittels des Kraftmesselementes (10) eine Kraft in Abhängigkeit von der Verformung des Stützbauteils (15, 21) erfasst ist.

3. Stützwinde nach Anspruch 1 oder 2, **dadurch gekennzeichnet, dass** unter der Spindellagerplatte (21) ein Axiallager (43) der Spindel (42) angeordnet ist.

4. Stützwinde nach Anspruch 3, **dadurch gekennzeichnet, dass** das Axiallager (43) unter Last mit seinem oberen Lagerabschnitt (44) an der Unterseite (23) des Stützbauteils (15, 21) abgestützt ist.

5. Stützwinde nach einem der Ansprüche 1 bis 4, **dadurch gekennzeichnet, dass** das Stützbauteil (15, 21) die Spindellagerplatte (21) ist.

6. Stützwinde nach Anspruch 4, **dadurch gekennzeichnet, dass** das Stützbauteil (15, 21) eine zwischen dem oberen Lagerabschnitt (44) des Axiallagers (43) und der Spindellagerplatte (21) angeordnete Messplatte (15) ist.

7. Stützwinde nach Anspruch 6, **dadurch gekennzeichnet, dass** die Messplatte (15) bezüglich des Außenrohrs (20) drehfest montiert ist.

8. Stützwinde nach Anspruch 6 oder 7, **dadurch gekennzeichnet, dass** die Messplatte (15) eine konkave oder brückenartige Form mit außenliegenden, der Spindellagerplatte (21) zugewandten Stützabschnitten (17) und einem dazwischen angeordneten, freitragenden Abschnitt (18) aufweist.

9. Stützwinde nach einem der Ansprüche 3 bis 8, **dadurch gekennzeichnet, dass** das Axiallager (43) mit seinem unteren Lagerabschnitt (45) an einem fest mit der Spindel (42) verbundenen Spindelanschlagring (46) anliegt.

10. Stützwinde nach einem der Ansprüche 3 bis 9, **dadurch gekennzeichnet, dass** das Kraftmesselement (10) über dem Axiallager (43) zumindest teilweise in dessen projizierter Fläche angeordnet ist.

11. Stützwinde nach einem der Ansprüche 1 bis 10, **dadurch gekennzeichnet, dass** das Kraftmesselement (10) stiftförmig ausgebildet und in eine komplementär ausgeformte Ausnehmung (25) des Stützbauteils (15, 21) spielfrei oder unter Vorspannung eingesetzt ist.

12. Stützwinde nach Anspruch 11, **dadurch gekennzeichnet, dass** das stiftförmig ausgebildete Kraftmesselement (10) ein Messdübel (11) ist.

13. Stützwinde nach Anspruch 11 und 12, **dadurch gekennzeichnet, dass** die Ausnehmung (25) eine in dem Stützbauteil (15, 21) ausgebildete Messdübelbohrung (25) ist, in welche der Messdübel (11) eingesetzt ist.

14. Stützwinde nach Anspruch 13, **dadurch gekennzeichnet, dass** der Messdübel (11) in der Messdübelbohrung (25) mechanisch verspannt ist.

15. Stützwinde nach Anspruch 13 oder 14, **dadurch gekennzeichnet, dass** die Messdübelbohrung (25) radial zu der Spindel (42) ausgerichtet ist.

16. Stützwinde nach einem der Ansprüche 1 bis 10, **dadurch gekennzeichnet, dass** das Kraftmesselement (10) eine Dehnungs-Mess-Streifen-Applikation (12) ist.

17. Stützwinde nach Anspruch 16, **dadurch gekennzeichnet, dass** die Dehnungs-Mess-Streifen-Applikation (12) auf einer Ober- und/oder Unterseite (22, 23) des Stützbauteils (15, 21) aufgebracht ist.

18. Stützwinde nach einem der Ansprüche 6 bis 8, **dadurch gekennzeichnet, dass** das Kraftmesselement (10) ein zwischen der Messplatte (15) und der Spindellagerplatte (21) angeordneter Drucksensor (19) ist.

19. Stützwinde nach Anspruch 18 soweit auf Anspruch 8 bezogen, **dadurch gekennzeichnet, dass** der Drucksensor (19) derart an dem freitragenden Abschnitt (18) der Messplatte (15) angeordnet ist, dass ein Kraftnebenschluss über den Drucksensor (19) auf die Spindellagerplatte (21) erfolgt.

## Claims

1. A landing gear having a force-measuring element (10), the landing gear comprises an outer tube (20), an inner tube (30) movably mounted in the outer tube (20), and a transmission assembly (40) comprising at least one spindle (42) driven by a gear (41), wherein the spindle (42) is fed through a spindle opening (24) in a spindle bearing plate (21) which is in contact with the outer tube (20), and a spindle nut (31) fastened to the inner tube (30) is held on the spindle (42),
**characterized in that**
the force-measuring element (10) is mounted on a support component (15, 21) disposed in the force flow between the spindle (42) and the outer tube (20).

2. The landing gear according to claim 1, **characterized in that** a force is detected by means of the force-measuring element (10) as a function of the deformation of the support component (15, 21).

3. The landing gear according to claim 1 or 2, **characterized in that** a thrust bearing (43) of the spindle (42) is arranged under the spindle bearing plate (21).

4. The landing gear according to claim 3, **characterized in that** the thrust bearing (43) is supported under load with its upper bearing section (44) on the underside (23) of the support component (15, 21).

5. The landing gear according to one of claims 1 to 4,
**characterized in that** the support component (15, 21) is the spindle bearing plate (21).

6. The landing gear according to claim 4, **characterized in that** the support component (15, 21) is a measuring plate (15) arranged between the upper bearing section (44) of the thrust bearing (43) and the spindle bearing plate (21).

7. The landing gear according to claim 6, **characterized in that** the measuring plate (15) is mounted in a rotationally fixed manner with respect to the outer tube (20).

8. The landing gear according to claim 6 or 7, **characterized in that** the measuring plate (15) has a concave or bridge-like shape with external support sections (17) facing the spindle bearing plate (21) and a cantilever section (18) arranged between them.

9. The landing gear according to one of claims 3 to 8,
**characterized in that** the thrust bearing (43) rests with its lower bearing section (45) on a spindle stop ring (46) which is firmly connected to the spindle (42).

10. The landing gear according to one of claims 3 to 9,
**characterized in that** the force-measuring element (10) is arranged above the thrust bearing (43) at least partially in its projected surface.

11. The landing gear according to one of claims 1 to 10,
**characterized in that** the force-measuring element (10) is pin-shaped and is inserted into a complementary shaped recess (25) of the support component (15, 21) without play or under tension.

12. The landing gear according to claim 11, **characterized in that** the pin-shaped force-measuring element (10) is a measuring dowel (11).

13. The landing gear according to claim 11 and 12,
**characterized in that** the recess (25) is a measuring dowel bore (25) formed in the support component (15, 21), into which the measuring dowel (11) is inserted.

14. The landing gear according to claim 13, **characterized in that** the measuring dowel (11) is mechanically braced in the measuring dowel bore (25).

15. The landing gear according to claim 13 or 14,
**characterized in that** the measuring dowel bore (25) is aligned radially to the spindle (42).

16. The landing gear according to one of claims 1 to 10,
**characterized in that** the force-measuring element (10) is a strain gauge application (12).

17. The landing gear according to claim 16, **characterized in that** the strain gauge application (12) is applied to an upper surface and/or an underside (22, 23) of the support component (15, 21).

18. The landing gear according to one of claims 6 to 8,
**characterized in that** the force-measuring element (10) is a pressure sensor (19) arranged between the measuring plate (15) and the spindle bearing plate (21).

19. The landing gear according to claim 18 as far as referred to claim 8, **characterized in that** the pressure sensor (19) is arranged at the cantilever section (18) of the measuring plate (15) in such a way that a force shunt occurs via the pressure sensor (19) onto the spindle bearing plate (21).

## Revendications

1. Train d'atterrissage comportant un élément de mesure de force (10), dans lequel le train d'atterrissage présente un tube extérieur (20), un tube intérieur (30) monté de manière coulissante dans celui-ci et un ensemble d'engrenages (40) qui comprend au moins une broche (42) entraînée par une roue dentée (41), qui passe à travers une ouverture de broche (24) d'une plaque de palier de broche (21) en prise avec le tube extérieur (20) et sur laquelle est maintenu un écrou de broche (31) fixé au tube intérieur (30),
**caractérisé en ce**
l'élément de mesure de force (10) est monté sur un élément de support (15, 21) disposé dans le flux de force entre la broche (42) et le tube extérieur (20).

2. Train d'atterrissage selon la revendication 1, **caractérisé en ce qu'**une force est détectée au moyen de l'élément de mesure de force (10) en fonction de la déformation de l'élément de support (15, 21).

3. Train d'atterrissage selon la revendication 1 ou 2, **caractérisé en ce qu'**un palier axial (43) de la broche (42) est disposé sous la plaque de palier de broche (21).

4. Train d'atterrissage selon la revendication 3, **caractérisé en ce que** le palier axial (43) est supporté sous charge par sa section de palier supérieure (44) sur la face inférieure (23) de l'élément de support (15, 21).

5. Train d'atterrissage selon l'une des revendications 1 à 4, **caractérisé en ce que** l'élément de support (15, 21) est la plaque de palier de broche (21).

6. Train d'atterrissage selon la revendication 4, **caractérisé en ce que** l'élément de support (15, 21) est une plaque de mesure (15) disposée entre la section de palier supérieure (44) du palier axial (43) et la plaque de palier de broche (21).

7. Train d'atterrissage selon la revendication 6, **caractérisé en ce que** la plaque de mesure (15) est montée de manière fixe en rotation par rapport au tube extérieur (20).

8. Train d'atterrissage selon la revendication 6 ou 7, **caractérisé en ce que** la plaque de mesure (15) présente une forme concave ou en forme de pont avec des sections de support (17) situées à l'extérieur et tournées vers la plaque de palier de broche (21) et une section (18) disposée entre elles et en porte-à-faux.

9. Train d'atterrissage selon l'une des revendications 3 à 8, **caractérisé en ce que** le palier axial (43) s'applique par sa section de palier inférieure (45) contre une bague de butée de broche (46) reliée de manière fixe à la broche (42).

10. Train d'atterrissage selon l'une des revendications 3 à 9, **caractérisé en ce que** l'élément de mesure de force (10) est disposé au-dessus du palier axial (43) au moins en partie dans sa surface projetée.

11. Train d'atterrissage selon l'une des revendications 1 à 10, **caractérisé en ce que** l'élément de mesure de force (10) est en forme de broche et est inséré dans un évidement de forme complémentaire (25) de l'élément de support (15, 21) sans jeu ou sous précontrainte.

12. Train d'atterrissage selon la revendication 11, **caractérisé en ce que** l'élément de mesure de force en forme de broche (10) est une cheville de mesure (11).

13. Train d'atterrissage selon la revendication 11 et 12, **caractérisé en ce que** l'évidement (25) est un alésage de cheville de mesure (25) formé dans l'élément de support (15, 21), dans lequel la cheville de mesure (11) est insérée.

14. Train d'atterrissage selon la revendication 13, **caractérisé en ce que** la cheville de mesure (11) est bloquée mécaniquement dans l'alésage de cheville de mesure (25).

15. Train d'atterrissage selon la revendication 13 ou 14, **caractérisé en ce que** l'alésage de cheville de mesure (25) est orienté radialement par rapport à la broche (42).

16. Train d'atterrissage selon l'une des revendications 1 à 10, **caractérisé en ce que** l'élément de mesure de force (10) est une application de jauge de contrainte (12).

17. Train d'atterrissage selon la revendication 16, **caractérisé en ce que** l'application de jauge de contrainte (12) est appliquée sur un côté supérieur et/ou inférieur (22, 23) du composant de support (15, 21).

18. Train d'atterrissage selon l'une des revendications 6 à 8, **caractérisé en ce que** l'élément de mesure de force (10) est un capteur de pression (19) disposé entre la plaque de mesure (15) et la plaque de palier de broche (21).

19. Train d'atterrissage selon la revendication 18, dans la mesure où elle est rattachée à la revendication 8, **caractérisé en ce que** le capteur de pression (19) est disposé sur la section en porte-à-faux (18) de la plaque de mesure (15) de sorte qu'il se produit une dérivation de force par l'intermédiaire du capteur de pression (19) sur la plaque de palier de broche (21).
